# EUROPEAN PATENT APPLICATION

(11) **EP 4 592 913 A1**
(43) Date of publication of application: **30.07.2025**
(21) Application number: 23867845.2
(22) Date of filing: 29.06.2023
(51) Int. Cl.: G06N 20/00, H04W 24/02

(54) **CONTROL DEVICE OF RADIO ACCESS NETWORK**

(30) Priority: 20.09.2022 JP 2022149390
(71) Applicant: KDDI Corporation, Tokyo 163-8003 (JP)
(72) Inventor: TSUKAMOTO, Yuu, Fujimino-shi, Saitama 356-8502 (JP); SAITOU, Kazuhiro, Fujimino-shi, Saitama 356-8502 (JP); YONEKAWA, Kei, Fujimino-shi, Saitama 356-8502 (JP); MURAMATSU, Shigeki, Fujimino-shi, Saitama 356-8502 (JP); KUROKAWA, Mori, Fujimino-shi, Saitama 356-8502 (JP); SHINBO, Hiroyuki, Fujimino-shi, Saitama 356-8502 (JP)
(74) Representative: Mathys & Squire
(86) International application number: PCT/JP2023/024203
(87) International publication number: WO 2024/062717

(57) **Abstract**

Anon-real time control unit (Non-RT RIC) and a near-real time control unit (Near-RT RIC) are hierarchized, and a learning and inference unit (11, 12, 13, 16, 17, 18), that controls the radio access network on the basis of a result of inference performed by applying newest data of the data collected to a learning model generated on the basis of data collected from an O-RAN base station device 10, is arranged in the near-real time control unit. Also, a part of a retraining unit (19, 20), that detects concept drift on the basis of a history of the data collected, and causes the learning and inference unit to retrain the learning model when the concept drift is detected, is arranged in the near-real time control unit, and other parts (14, 15) are placed in the non-real time control unit.

## Description

### TECHNICAL FIELD

The present invention relates to a control device for a radio access network, and particularly relates to a control device for a radio access network having a function for retraining a learning model generated by training data collected from a radio access network.

### BACKGROUND ART

The O-RAN Alliance is currently advancing the development of specifications in radio access networks (RAN) for dividing the previously-integrated functions of base stations into a Centralized Unit (CU) that performs session processing, a Distributed Unit (DU) that performs baseband processing, and a Radio Unit (RU) that performs radio processing, and opening the specifications for the interfaces among those units.

In Beyond 5G systems, performance such as throughput, communication latency, the number of connections, and the like is increasing, and such systems are expected to provide a wide variety of services (e.g., robot control, connected cars, AR/VR, and the like). Meanwhile, artificial intelligence (Al)/machine learning (ML) are attracting attention as key technologies for realizing those services.

Non-Patent Literature (NPL) 1 and 2 discuss applying AI/ML in a variety of applications, such as beamforming control, radio resource allocation, traffic prediction, base station function arrangement, and the like in order to maximize network performance with the limited network resources of a RAN.

NPL 3 discloses a technique in which a learning model is generated through learning performed on the basis of data collected from a RAN, inference is performed using the data collected from the RAN and the learning model, and the RAN is then controlled according to the inference results.

However, as time passes, the environment changes, and the like, the characteristics of the data used for the inference may change from those of the data used in learning (concept drift), causing a drop in the inference performance of the model.

In response to such technical issues, the inventors of the present invention have proposed, and applied for a patent on, an AI system that accumulates and monitors data related to AI/ML learning and inference from O-RAN base station devices, detects concept drift, and performs retraining (Patent Literature (PTL) 1).

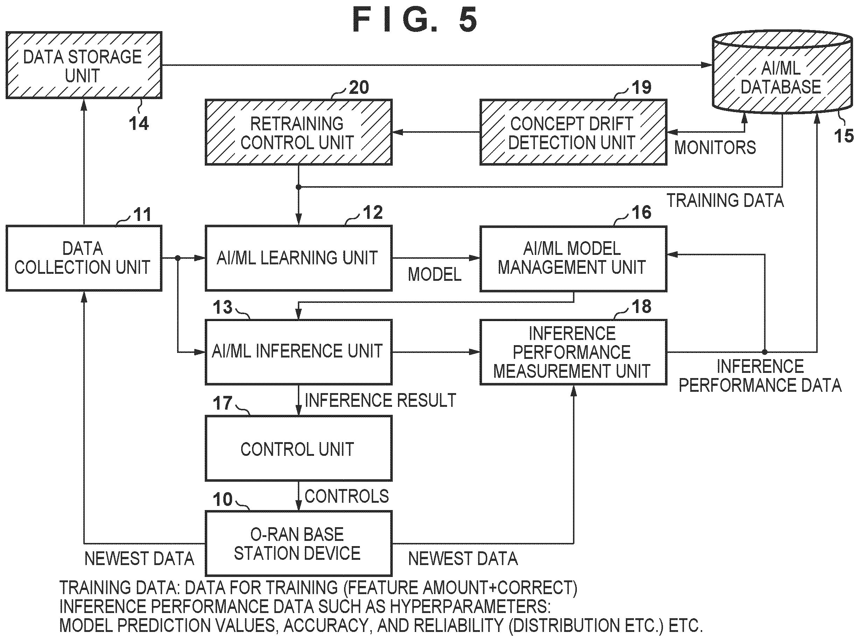

FIG. 5 is a function block diagram illustrating a conventional configuration of an AI system that detects concept drift and performs retraining.

A data collection unit 11 repeatedly collects the newest data from an O-RAN base station device 10, provides the collected newest data (collected data) to an AI/ML learning unit 12 and an AI/ML inference unit 13, and also accumulates that data in a data storage unit 14. The collected data accumulated in the data storage unit 14 is managed in an AI/ML database 15. The AI/ML learning unit 12 generates a learning model for learning the collected data and controlling the O-RAN base station device 10.

An AI/ML model management unit 16 manages learning models previously generated by the AI/ML learning unit 12. The AI/ML inference unit 13 performs inference based on the collected data newly collected by the data collection unit 11 and the learning model, and outputs an inference result to a control unit 17 and an inference performance measurement unit 18. The control unit 17 controls the O-RAN base station device 10 on the basis of the inference result.

The inference performance measurement unit 18 determines an inference performance on the basis of (i) the newest data collected after the control unit 17 has controlled the O-RAN base station device 10 on the basis of the inference result and (ii) that inference result, and stores inference performance data indicating the determined inference performance in the AI/ML database 15.

A concept drift detection unit 19 periodically obtains at least one of the collected data and the inference performance data from the AI/ML database 15, and determines whether concept drift is occurring. Upon detecting concept drift, the concept drift detection unit 19 instructs a retraining control unit 20 to generate a new learning model (perform retraining). The retraining control unit 20 provides data for retraining to the AI/ML learning unit 12 and instructs the retraining to be performed.

When retraining is instructed, the AI/ML learning unit 12 generates a new learning model on the basis of the collected data newly collected by the data collection unit 11, and outputs that learning model to the AI/ML model management unit 16. The AI/ML model management unit 16 compares the current learning model used by the AI/ML inference unit 13 with the new learning model, and outputs the new learning model to the AI/ML inference unit 13 if the new learning model provides better inference performance than the current learning model.

The AI/ML inference unit 13 performs inference thereafter using the new learning model. Note that if the new learning model provides worse inference performance than the current learning model, the AI/ML model management unit 16 can instruct the AI/ML learning unit 12 to perform retraining.

### CITATION LIST

### PATENT LITERATURE

PTL 1: Japanese Patent Application No. 2022-046347

### NON-PATENT LITERATURE

NPL 1: M. E. Morocho-Cayamcela, H. Lee and W. Lim, "Machine Learning for 5G/B5G Mobile and Wireless Communications: Potential, Limitations, and Future Directions," in IEEE Access, vol. 7, pp. 137184-137206, 2019
NPL 2: J. Kaur, M. A. Khan, M. Iftikhar, M. Imran and Q. Emad Ul Haq, "Machine Learning Techniques for 5G and Beyond," in IEEE Access, vol. 9, pp. 23472-23488, 2021.
NPL 3: O-RAN Alliance, "AI/ML workflow description and requirements," O-RAN.WG2.AIML-v01.03, Jul. 2021

### SUMMARY OF INVENTION

### TECHNICAL PROBLEM

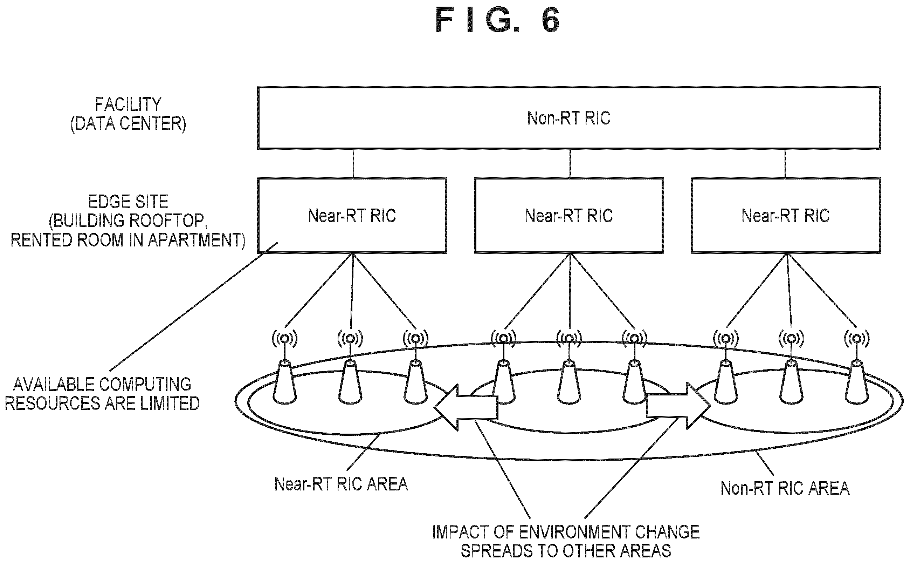

As indicated in FIG. 6, RAN Intelligent Controllers (RICs), which handle the control and optimization of RAN functions, have a hierarchical structure including a "Non-Real Time (RT) RIC", which is a non-real-time component, and "Near-RT RICs", which are near-real time components, and these components have different control periods.

Here, the RICs have different characteristics, namely that the control period of the Non-RT RIC is at least 1 sec, providing a broad area for control, whereas the control period of the Near-RT RIC is 10 msec to 1 sec, for a narrow area for control. As such, the optimal arrangements of function blocks in the Near-RT RIC and the Non-RT RIC with respect to AI/ML has been a subject of investigation.

For example, Non-RT RICs may be installed in facilities, and Near-RT RICs may be installed at edge sites such as building rooftops. In this case, the following technical issues may arise if all functions, both the functions pertaining to AI/ML learning and the functions pertaining to AI/ML retraining, are provided in the Near-RT RIC in order to prioritize real-time performance.

First, the processing load on the Near-RT RIC will increase. In other words, edge sites have power and space constraints, and it is therefore not possible to provide ample computing resources.

Second, only information under the Near-RT RIC can be used to detect concept drift. In other words, the information of adjacent areas cannot be used, which delays the detection of concept drift.

For example, if road construction is carried out in a given area and the traffic volume of connected cars changes, it is assumed that changes in the vehicle flow rate will affect adjacent areas as well. At this time, if only information of one's own area is monitored, environmental changes caused by the road construction cannot be detected immediately, which reduces the ability of the retraining to adapt to the environmental changes.

### SOLUTION TO PROBLEM

An object of the present invention is to address the technical issues described above by providing a control device for a radio access network that optimizes the arrangement of function blocks related to AI/ML in Near-RT RICs and Non-RT RICs.

To achieve the object described above, the present invention provides a control device for a radio access network in which a non-real time control unit and a near-real time control unit are hierarchized. The control device includes: a learning and inference unit that generates a learning model on the basis of data collected from the radio access network, and controls the radio access network on the basis of a result of inference performed by applying newest data of the data collected to the learning model; and a retraining unit that detects concept drift on the basis of a history of the data collected, and causes the learning and inference unit to retrain the learning model when the concept drift is detected. The learning and inference unit is provided in the near-real time control unit, and the retraining unit is provided distributed among the near-real time control unit and the non-real time control unit.

### ADVANTAGEOUS EFFECTS OF INVENTION

According to the present invention, the following effects are achieved.
(1) Functions pertaining to learning and inference are provided in the near-real time control unit, and functions pertaining to retraining are distributed among the near-real time and non-real time control units. This makes it possible to reduce the processing load on the near-real time control unit.
(2) Because some of the functions pertaining to retraining are provided in the non-real time control unit, the learning model can be retrained even if the edge site has limited computing resources.
(3) Since the functions pertaining to the control of the detection of concept drift and the retraining are provided in the near-real time control unit, the detection of concept drift and the retraining can be performed at high speed using only information under the management of the near-real time control unit.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a function block diagram illustrating the configuration of the main parts of an O-RAN control device according to one embodiment of the present invention.
FIG. 2 is a diagram illustrating an example of data to be added to an A1 interface to implement a request for information to an AI/ML database.
FIG. 3 is a diagram illustrating an example of sending a set of inference performance data and network information in table format through the A1 interface.
FIG. 4 is a sequence flow illustrating operations according to the present invention.
FIG. 5 is a function block diagram illustrating a conventional configuration of an AI system that detects concept drift and performs retraining.
FIG. 6 is a function block diagram illustrating a RAN Intelligent Controller (RIC).

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

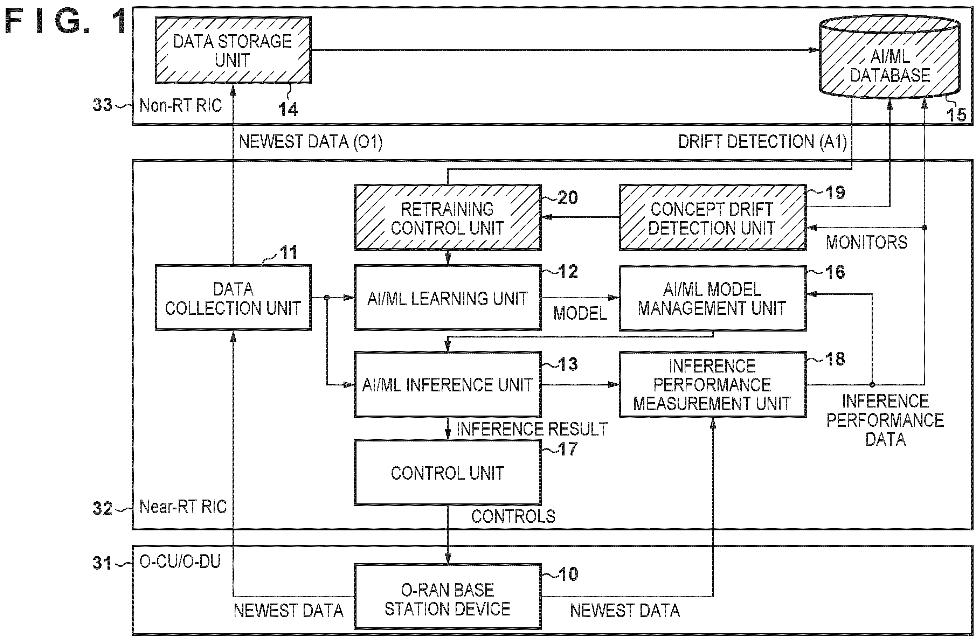

FIG. 1 is a function block diagram illustrating the configuration of the main parts of an O-RAN control device according to one embodiment of the present invention. Here, configurations not needed for the description of the present invention are not shown. The same reference signs as those mentioned above indicate the same or equivalent parts. The present embodiment is characterized in that functions pertaining to AI/ML learning are provided in a Near-RT RIC, and functions pertaining to AI/ML retraining are provided in a Non-RT RIC.

The O-RAN control device is constituted by an O-CU/O-DU 31, a Near-RT RIC 32, and a Non-RT RIC 33, and the functions can communicate with one another over various interfaces, including the O1 interface, the A1 interface, and the E2 interface defined by the O-RAN Alliance. The O-RAN base station device 10 is provided in the O-CU/O-DU 31.

A data collection unit 11, an AI/ML learning unit 12, an AI/ML inference unit 13, an AI/ML model management unit 16, a control unit 17, and an inference performance measurement unit 18 are mainly provided in the Near-RT RIC 32 as functions pertaining to AI/ML learning and inference.

A concept drift detection unit 19 and a retraining control unit 20 are further provided in the Near-RT RIC 32 as part of functions pertaining to the retraining of a learning model. A data storage unit 14 and an AI/ML database 15 are provided in the Non-RT RIC 33 as other functions pertaining to the retraining of the learning model.

In the Near-RT RIC 32, the data storage unit 14 collects newest data from the O-RAN base station device 10 and sends that data to the data storage unit 14 of the Non-RT RIC 33 through the O1 interface. The inference performance measurement unit 18 sends inference performance data to the AI/ML model management unit 16 and the concept drift detection unit 19, and also sends the inference performance data to the AI/ML database 15 of the Non-RT RIC 33 through the A1 interface. The concept drift detection unit 19 sends a detection of concept drift to the AI/ML database 15 of the Non-RT RIC 33 through the A1 interface.

In this manner, in the present embodiment, the functions pertaining to retraining are distributed among the Non-RT RIC 31 and the Near-RT RIC 32, and thus the following three pieces of information in particular are added to the A1 interface as information for detecting concept drift.
(1) Request for information from the AI/ML database 15
(2) Sending the specified information
(3) Notification of drift detection

To implement the (1) request for information from the AI/ML database 15, in the present embodiment, "data type", "data to be obtained", "data to be obtained", and "data obtainment interval" are added. "Data type" includes "inference performance data" and "network information (information collected from the base station through the O1 interface)".

To implement (2) sending the specified information, in the present embodiment, each data item is sent in table format.

To implement the (3) notification of drift detection, in the present embodiment, a request for retraining data can be made from the Near-RT RIC to the Non-RT RIC.

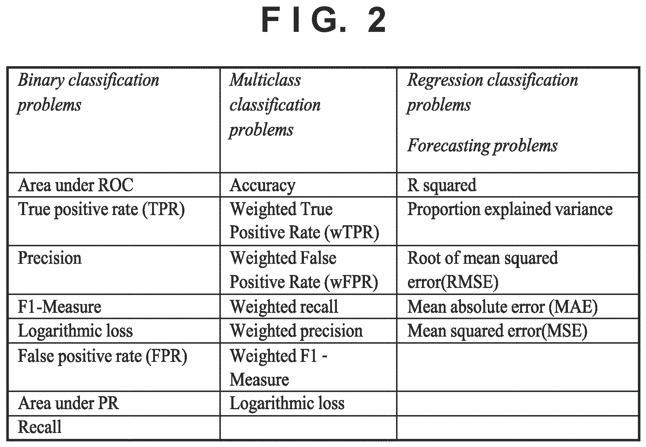

The information to be added to the A1 interface will be described in further detail below. With regard to (1) the request for information from the AI/ML database, in O-RAN WG2, the indicators listed in FIG. 2 can be given for the "inference performance data" of the "data types".

These indicators specify indicators for binary classification problems, indicators for multiclass classification problems, and indicators for regression classification problems. In the present embodiment, a plurality of "inference performance data" items can be selected from FIG. 2, and an average value, a median value, or the like for a specified period of time can be obtained.

For the "network information" among the "data types", an ID (0 to 4) such as one of the following is added to the elements of the network information in advance, which enables the network information to be specified using the ID.
0: throughput
1: communication latency
2: radio resource utilization
3: computing resource utilization
4: transmission line resource utilization

For the "data to be obtained", the items in the inference performance data and the network information to be obtained are specified by, for example, a cell ID, a slice ID, and a UEID. The "data obtainment interval" is assumed to specify the interval over which the data is to be obtained.

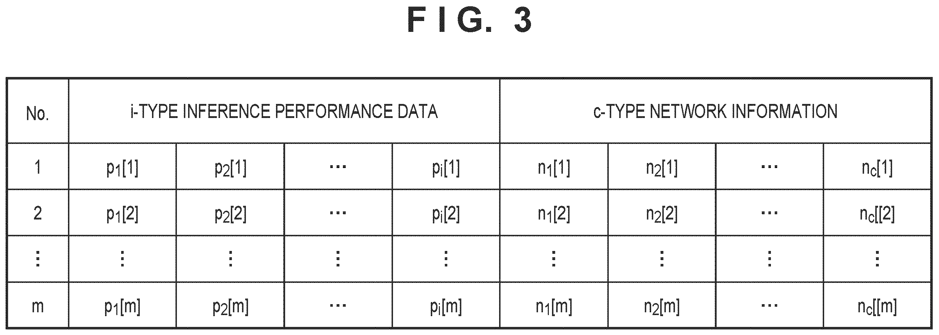

With regard to (2) sending the specified information, in the present embodiment, m sets of i-type inference performance data (p1 to pi) and c-type network information (n1 to nc) designated in the (1) request for information to the AI/ML database are sent in table format and at a specified time interval, as illustrated in FIG. 3.

With regard to (3) notification of drift detection (the request for retraining data), in the present embodiment, when the concept drift detection unit 19 detects concept drift, a request for retraining data is made to the Non-RT RIC. At this time, the target learning model is specified by ID.

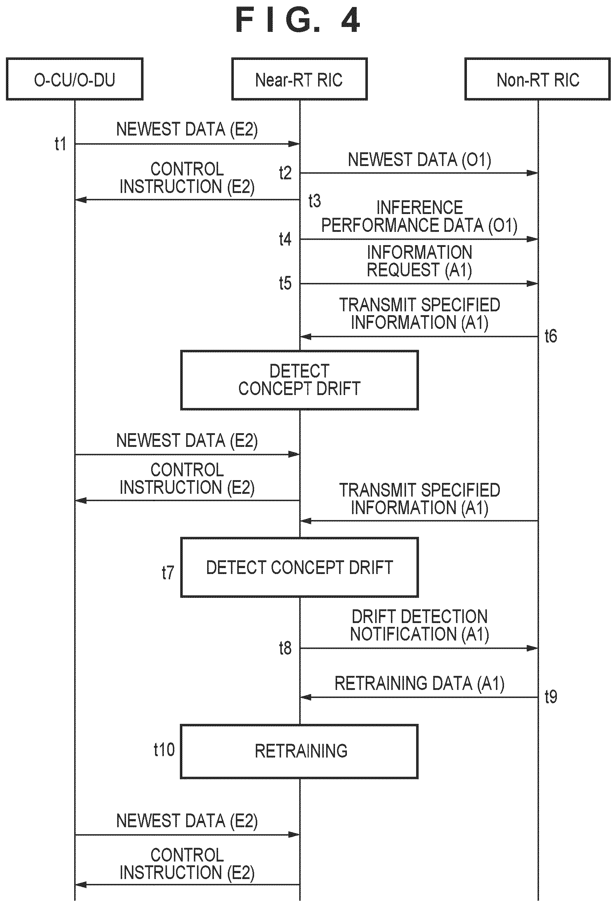

FIG. 4 is a sequence flow illustrating operations according to the present embodiment. The descriptions given here will focus on the communication between the O-CU/O-DU, the Near-RT RIC, and the Non-RT RIC.

In the present embodiment, the communication between the O-CU/O-DU and the Near-RT RIC is performed through the E2 interface, and the communication between the Near-RT RIC and the Non-RT RIC is performed through the O1 interface or the A1 interface.

The O-CU/O-DU repeatedly sends the newest data of the O-RAN base station device 10 to the Near-RT RIC in a predetermined period. In the present embodiment, the O-CU/O-DU sends the newest data to the Near-RT RIC through the E2 interface at time t1.

In the Near-RT RIC, the newest data is obtained by the data collection unit 11. The data collection unit 11 sends the newest data to the Non-RT RIC through the O1 interface at time t2. The AI/ML inference unit 13 performs inference by applying the newest data to the current learning model, and communicates the inference result to the control unit 17 and the inference performance measurement unit 18. The control unit 17 instructs the O-RAN base station device 10 of the O-CU/O-DU to perform control based on the inference result.

The inference performance measurement unit 18 determines the inference performance on the basis of (i) the newest data collected after the control unit 17 has controlled the O-RAN base station device 10 on the basis of the inference result and (ii) that inference result, and at time t4, sends inference performance data based on the newest data to the Non-RT RIC through the O1 interface. The newest data and inference performance data are stored in the AI/ML database 15.

On the other hand, the Near-RT RIC periodically makes a request to the Non-RT RIC for information used to detect concept drift. In the present embodiment, at time t5, the concept drift detection unit 16 of the Near-RT RIC makes a request, to the Non-RT RIC through the A1 interface, for the throughput and a loss value as the inference performance data, for each service in each cell under the Near-RT RIC.

At time t6, the requested information is sent from the Non-RT RIC to the Near-RT RIC through the A1 interface. In the Near-RT RIC, each time the requested information is obtained, the concept drift detection unit 19 detects the concept drift on the basis of the obtained information.

Then, when at time t7 the concept drift detection unit 19 detects concept drift, at time t8, the Non-RT RIC is notified of the detection of the concept drift through the A1 interface. At time t9, the AI/ML database 15 of the Non-RT RIC sends data for retraining to the Near-RT RIC through the A1 interface in response to the notification of the detection of the concept drift. In the Near-RT RIC, the retraining control unit 20 notifies the AI/ML learning unit 12 of an instruction for retraining and the data for the retraining.

At time t10, the AI/ML learning unit 12 retrains the learning model, and updates and registers the retrained learning model in the AI/ML model management unit 16. Accordingly, when the newest data is received thereafter, control based on the retrained learning model is performed.

According to the present embodiment, of functions pertaining to learning and inference and functions pertaining to retraining, functions pertaining to the detection of concept drift and the control of retraining are provided in the Near-RT RIC, whereas of functions pertaining to retraining, functions pertaining to the accumulation of data used for detecting concept drift are provided in the Non-RT RIC, which makes it possible to reduce the processing load on the Near-RT RIC.

Accordingly, even in environments where concept drift occurs frequently, as long as there are relatively sufficient edge site computing resources, the concept drift can be detected with good response time, which makes it possible to improve the adaptability to environmental changes.

As a result, the embodiment makes it possible to contribute to Goal 9 of the United Nations-led Sustainable Development Goals (SDGs), which is to "build resilient infrastructure, promote inclusive and sustainable industrialization, and foster innovation", and Goal 11, which is to "make cities inclusive, safe, resilient, and sustainable".

The invention is not limited to the foregoing embodiments, and various variations/changes are possible within the spirit of the invention.

This application claims priority from Japanese Patent Application No. 2022-149390, filed September 20, 2022, which is hereby incorporated by reference herein.

## Claims

1. A control device for a radio access network in which a non-real time control unit and a near-real time control unit are hierarchized, the control device **characterized by** comprising:
a learning and inference unit that generates a learning model on the basis of data collected from the radio access network, and controls the radio access network on the basis of a result of inference performed by applying newest data of the data collected to the learning model; and
a retraining unit that detects concept drift on the basis of a history of the data collected, and causes the learning and inference unit to retrain the learning model when the concept drift is detected,
wherein the learning and inference unit is provided in the near-real time control unit, and the retraining unit is provided distributed among the near-real time control unit and the non-real time control unit.

2. The control device for a radio access network according to claim 1, **characterized in that** the learning and inference unit includes:
data collection means for collecting the newest data from the radio access network;
learning means for generating a learning model on the basis of the data collected;
control means for controlling the radio access network on the basis of a result of inference by applying the collected data to the learning model; and
inference performance measuring means for measuring an inference performance on the basis of the data collected and the result of the inference.

3. The control device for a radio access network according to claim 2, **characterized in that** the retraining unit includes:
a database in which the data collected and the inference performance is stored;
concept drift detecting means for detecting concept drift on the basis of the data and the inference performance stored in the database; and
retraining control means for sending information to the learning and inference unit to retrain the learning model when concept drift is detected,
wherein the database is provided in the non-real time control unit.

4. The control device for a radio access network according to claim 3, **characterized in that** the near-real time control unit communicates a request for information from the database to the non-real time control unit through an A1 interface.

5. The control device for a radio access network according to claim 4, **characterized in that** the non-real time control unit communicates the information requested to the near-real time control unit through the A1 interface, and
the concept drift detecting means detects the concept drift on the basis of the information communicated.

6. The control device for a radio access network according to claim 5, **characterized in that** the near-real time control unit communicates the concept drift detected by the concept drift detecting means to the non-real time control unit through the A1 interface.

7. The control device for a radio access network according to claim 6, **characterized in that** when the concept drift is detected, the database provided in the non-real time control unit sends data used to retrain the learning model to the near-real time control unit through the A1 interface.
